# EUROPEAN PATENT SPECIFICATION

(11) **EP 2 059 013 B1**
(45) Date of publication and mention of the grant of the patent: **22.12.2010**
(21) Application number: 08167524.1
(22) Date of filing: 24.10.2008
(51) Int. Cl.: H04M 3/42, H04M 1/725

(54) **A telephone communication system and method for transmitting reply messages**
Telefonkommunikationssystem und Verfahren zur Übertragung von Antwortnachrichten
Système de communication téléphonique et procédé de transmission de messages de réponse

(30) Priority: 08.11.2007 US 983250
(43) Date of publication of application: 13.05.2009
(73) Proprietor: Delphi Technologies, Inc., Troy, Michigan 48007 (US)
(72) Inventor: Loisch, Jan M., Kokomo, IN 46901 (US); Diamond, Harry, Tipton, IN 46072 (US)
(74) Representative: Denton, Michael John

(56) References cited:
- EP-A- 1 331 799
- WO-A-2007/086747
- US-A1- 2007 072 602
- US-A1- 2007 121 901

## Description

### Technical Field

The present invention generally relates to a system and method of telephone communication, and more particularly, to a system and method of telephone communication, wherein reply messages are transmitted.

### Background of the Invention

Generally, telephones are used for communication between two parties at one particular time. However, at times during the communication between the two parties, a third party can attempt to communicate with one of the two parties of the original telephone communication. There have been developments in order to communicate with a third party under such circumstances; however, these developments typically require an interruption between the two parties in the original communication.

One example of such a development is a call-waiting option, wherein the party in the original communication is typically notified that a third party is attempting to communicate with them. Generally, the party that receives the notification has the option of ignoring the notification, or interrupting the original communication to answer the communication with the third party. Another example of such a development is three-way calling, wherein multiple parties in multiple locations using multiple telephones typically can all communicate within a single conversation. However, the three-way calling generally requires that all the parties to the conversation be involved in the discussed subject matter.

Additionally, automated answering systems have been developed for answering a call when a person is unavailable, such as when the person is not within the vicinity of the telephone. One example of an automated answering device is an answering machine or voice mail, wherein a person generally prerecords a message, which all parties that access the automated answering system hear prior to being able to leave their message.

Generally, another development is where a party cannot answer a call from another party, but sends the other party a text message. Typically, the party must type out the text message at the time the call is received, and thus, the other party typically does not receive the message prior to being directed to the party's voice or text mail system, wherein the party's standard voice mail message is communicated.

One exemplary device is disclosed in US-A-2007/0072602, entitled "AUTOMATED REPLY TO VOICE CALL." This reference discloses an embodiment that provides reception of a voice call and associated caller information, presentation of one or more selectable predetermined responses to the voice call, reception of a selection of one of the predetermined responses, and transmission of the selected predetermined response using the caller information, and the selected predetermined response is a text message and/or the voice all may be received from a voice mailbox, wherein the selected predetermined response is a voice message. Another exemplary device is disclosed in US-A-2007/0121901, entitled "PROVIDING ANSWERING MESSAGE OPTIONS FOR ANSWERING CALLS." This reference discloses devices, networks, and methods providing a plurality of answering message options to a called party for answering an incoming call. When a call is received in a called device, the called device identifies a plurality of answering messages predefined by the called party. The called device then provides answering message options to the called party based on the identified answering message options. Responsive to the selection by the called party, the called device and/or the communication network transmits an answering message to the calling party. The answering message in essence "answers" the call for the called party. The called party does not actually have to speak into the called device to answer the call.

### Summary of the Invention

According to one aspect of the present invention, a telephone system for transmitting reply messages includes a plurality of telephone devices, wherein at least a first telephone device of the plurality of telephone devices has hardware circuitry and a display. The hardware circuitry receives a signal from a second telephone device of the plurality of telephone devices. The display is in communication with the hardware circuitry and displays an image when the signal is received. A processor is in communication with the hardware circuitry and the display, and the processor performs the steps including communicating with the hardware circuitry to display the image on the display when the signal is received, wherein at least one prerecorded reply message is available for selection when the signal is received, and receiving a command inputted by a user of the first telephone device selecting one of the available reply messages, wherein the selected reply message is transmitted to the second telephone device.

According to another aspect of the present invention, a method of communicating a reply message with a telephone device in a telephone communication system includes the steps of receiving with a first telephone device a signal transmitted from a second telephone device, displaying an image on a display of the first telephone device when a signal is received by the first telephone device, and making at least one prerecorded reply message available for selection when a signal is received. The method further includes the steps of selecting one of the available reply messages, and transmitting the selected reply message to the second telephone device.

These and other features, advantages and objects of the present invention will be further understood and appreciated by those skilled in the art by reference to the following specification, claims and appended drawings.

### Brief Description of the Drawings

The present invention will now be described, by way of example, with reference to the accompanying drawings, in which:
Fig. 1 is an environmental view of a telephone communication system, in accordance with one embodiment of the present invention;
Fig. 2 is a block diagram of a telephone device in a telephone communication system, in accordance with one embodiment of the telephone device of the present invention;
Fig. 3 is a flow chart illustrating a method of communicating a reply message with a telephone device in a telephone communication system, in accordance with one embodiment of the present invention;
Fig. 4 is a flow chart illustrating an exemplary software routine implemented by a processor, according to one embodiment of the present invention; and
Fig. 5 is a flow chart illustrating an exemplary method of transmitting a default reply message, according to one embodiment of the present invention.

### Description of Preferred Embodiments

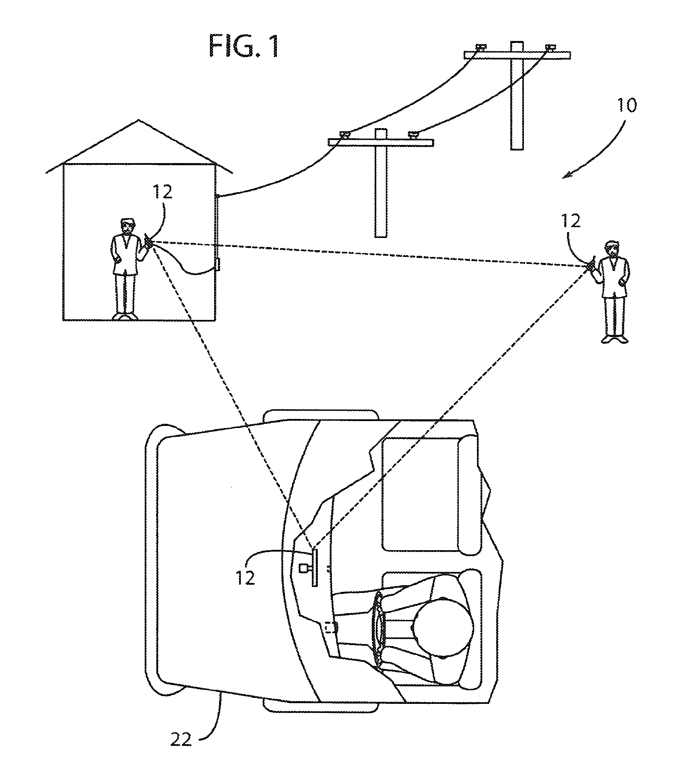

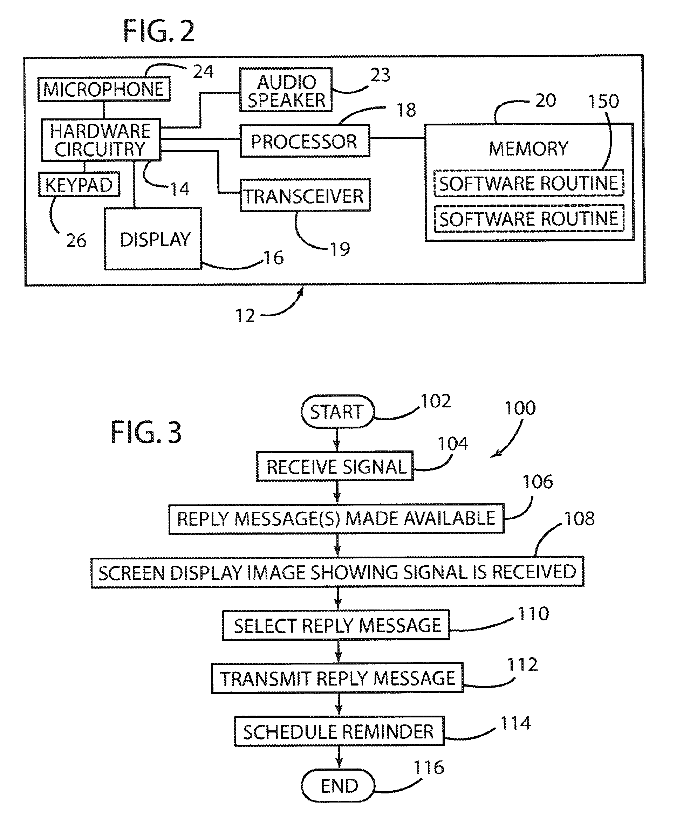

In reference to both Figs. 1 and 2, a telephone communication system is generally shown in Fig. 1 at reference identifier 10. The telephone communication system 10 includes a plurality of telephone devices 12, wherein at least one of the plurality of telephone devices 12 includes hardware circuitry 14 that receives and transmits a signal. The at least one of the plurality of telephone devices 12 further includes a display or screen 16. Typically, the display 16 is in communication with the hardware circuitry 14, such that the display 16 displays an image when the signal is received. A processor 18 is in communication with the hardware circuitry 14 and the display 16, and performs one or more steps for transmitting a prerecorded reply message when a signal is received, as described in greater detail herein. According to one embodiment, the telephone device 12 includes a transceiver 19 for receiving and transmitting signals.

For purposes of explanation and not limitation, each of the telephone devices 12 can be any of a landline telephone, a cellular telephone, or a telephone integrated with a vehicle 22. The telephone devices 12 can provide service from a landline telephone service provider, a cellular telephone service provider, a Voice over Internet Protocol (VoIP) telephone service provider, two-way communication provider, one or more software routines implemented by a hardware device (i.e., a computer readable medium or the like), the like, or a combination thereof. According to one embodiment, the telephone device 12 integrated with the vehicle 22 can be a telephone included in the ON-STAR™ system. Alternatively or additionally, the telephone device 12 that is integrated with the vehicle 22 can be placed in communication with a vehicle's audio system, such as, but not limited to, a wireless BLUETOOTH™ connection, according to one embodiment.

According to one embodiment, the processor 18 is included in the telephone device 12. Alternatively, the processor 18 is included in the telephone communication system 10 and separate from the hardware circuitry 14 of at least one of the telephone devices 12. Typically, the processor 18 can execute one or more software routines in order to perform the steps for communicating the reply message in response to a received signal. Additionally, the processor 18 can be in communication with a memory device 20, which can be used to store the one or more software routines, or other desirable data. By way of explanation and not limitation, the memory device 20 can be volatile memory devices, such as a random access memory (RAM) device or the like, non-volatile memory devices, such as a read-only memory (ROM) device, electronically erasable programmable read-only memory (EEPROM), flash memory, or the like, or a combination of volatile and non-volatile devices.

The processor 18 communicates an image that is displayed on the display 16 when the signal is received. Additionally, the processor 18 renders at least one reply message available for selection when the signal is received. When the processor 18 receives a command selecting one of the available reply messages, the selected reply message is transmitted to an originator (i.e., a user of a second telephone device) of the received signal. According to one embodiment, the user can be required to confirm the selection of the available reply message prior to the reply message being sent. For purposes of explanation and not limitation, the originator can be a user of a second telephone device within the telephone communication system 10 that is in communication with a first telephone device, such that signals are being communicated between the first and second telephone devices. The displayed image can include desirable information, such as, but not limited to, identifying the originator, the available reply messages, the like, or a combination thereof. It should be appreciated by those skilled in the art that the originator can be identified by other distinguishing features, such as, but not limited to, a ring-tone corresponding to a particular originator, or the like.

Typically, the available reply messages differ so that when communicated, desirable information is communicated to the recipient of the reply message, as described in greater detail below. Thus, a user of the telephone device 12 can prerecord multiple reply messages, so that when the reply messages are made available, the user has a variety of reply messages to choose from, according to one embodiment. By way of explanation and not limitation, one of the available reply messages can communicate the message "I will call you back in thirty minutes." Thus, the user of the telephone device 12 communicates selected useful information to the recipient of the reply message, rather than a standard message that is non-specific to the user or current circumstances, being communicated when the user of the telephone device 12 does not answer. The selected reply message thus communicates useful information that is relevant to that particular recipient at that particular time.

According to one embodiment, the telephone device 12 being contacted by the originator will continue to ring until the telephone device 12 is answered or a reply message is selected and communicated or transmitted to the originator. Additionally or alternatively, if the user of the telephone device 12 knows he/she will not have access to the telephone device 12 for a period of time, the user can select a prerecorded reply message to be communicated to the originator after a predetermined number of rings, according to one embodiment. According to an alternate embodiment, the telephone device 12 has a default reply message that is communicated to the originator after a predetermined number of rings, unless one of the available reply messages is selected. Thus, the reply messages can be prerecorded so that the reply message can be communicated to the originator within the time period that the originator would anticipate being directed to a voice mail or message system.

Additionally, the processor 18 can set an alarm to be activated at the expiration of a predetermined period of time, wherein the predetermined period of time is dependent upon the selected reply message, according to one embodiment. Thus, when the exemplary reply message of "I will call you back in thirty minutes" is selected and communicated to the originator, the processor 18 can set an alarm for thirty (30) minutes. Thus, at the expiration of the period of time, the alarm can be activated as a reminder to the user of the telephone device 12 to call the recipient of the reply message. According to one embodiment, when the processor 18 is included in the hardware circuitry 14, the processor 18 executes one or more software routines to activate a component on the telephone device 12 to alert the user. According to an alternate embodiment, when the processor 18 is separate from the hardware circuitry 14, the processor 18 executes one or more software routines, such that a signal is communicated to the telephone device 12 to alert the user. Typically, the predetermined period of time is based upon the selected reply message, and, thus, the processor 18 can activate the alarm to remind the user of the telephone device 12 after differing periods of time, depending upon which reply message had been selected and communicated. For purposes of explanation and not limitation, the alarm can be an audio alarm emitted from an audio speaker 23, or a vibration device that vibrates the telephone device 12, according to one embodiment.

By way of explanation and not limitation, the prerecorded transmitted reply message can be an automated voice message, a voice message, a text message, a canned text message, a picture message, a video message, the like, or a combination thereof. Thus, if an automated voice message is used, the provider of the telephone device 12 or message service can provide a variety of prerecorded automated or canned voice messages, which can be preselected as available reply messages, according to one embodiment. According to one embodiment, if a canned text message is used, the provider of the telephone device 12 or message service can provide a variety of canned text messages, which can be preselected as available reply messages. Additionally or alternatively, a user of the telephone device 12 can prerecord voice messages or video messages, which can be used as the available reply message, according to one embodiment.

According to one embodiment, the command for selecting one of the available reply messages can be a voice command, a touch screen command, a keypad command, or the like. Thus, the telephone device 12 can include a microphone 24 for receiving a voice command. Alternatively or additionally, the display 16 can be a touch screen for receiving a touch screen command. Additionally, a keypad 26 can be used for entering other data into the telephone device 12 and receive the command for selecting a reply message, according to one embodiment.

Additionally or alternatively, one or more default reply messages can be corresponding to an originator or group of originators, such that a selective do-not-disturb can be implemented, so that the corresponding default reply message is immediately transmitted to the originator without the user of the first telephone device being notified that the originator is contacting the user. By way of explanation and not limitation, a first group of originators, such as family members, can be designated, while a second group of originators, such as business contacts, can be designated. The second group can be selected for immediate routing to a corresponding default reply message, such that the user of the first telephone device is not notified that an originator from the second group is attempting to contact them. Further, the user of the first telephone device is notified that an originator from the first group is attempting to contact them, such that the user of the first telephone device can communicate with the originator, select and transmit an available reply message, allow a predetermined default reply message to be transmitted to the originator, or the like.

In reference to Figs. 1-3, a method of communicating a reply message with the telephone device 12 in the telephone communication system 10 is generally shown in Fig. 3 at reference identifier 100. The method 100 starts at step 102, and proceeds to step 104, wherein the signal is received by the telephone device 12. The available reply messages are made available at step 106. At step 108, the display 16 displays an image showing that the signal is received. According to one embodiment, the display 16 also displays an image that shows at least a portion of the available reply messages. Additionally, the display 16 can include an image that indicates who the originator or caller is, when the first telephone device receives a signal. It should be appreciated by those skilled in the art that the originator can be identified using other distinguishing features, such as, but not limited to, a ring-tone associated with a particular originator or telephone number.

At step 110, a reply message is selected. According to one embodiment, a command is entered by a user of the telephone device 12 in order to select the reply message, wherein the received command can be one of a voice command, a touch screen command, and a keypad command. The selected reply message is transmitted at step 112. According to one embodiment, the processor 18 can schedule a reminder based upon the selected reply message at step 114. After step 112 and step 114, the method 100 then ends at step 116.

By way of explanation and not limitation, a first user of a first telephone device in the telephone communication system 10 is communicating with a third user using a third telephone device in the telephone communication system 10 when a second user of a second telephone device of the telephone communication system 10 (i.e., the originator) contacts the first user, and thus, transmits a signal from the second user's telephone device 12 to the first user's telephone device 12, according to one embodiment. When the first user's telephone device 12 receives the signal, the reply messages are made available. The first user can then select one of the available reply messages that is to be transmitted to the second user. Thus, if the first user is on a conference call that will last another hour, the reply message can inform the second user of the situation. Alternatively, if the first user will be unavailable for the remainder of the day, the selected reply message can inform the second user of the situation. Thus, the reply messages can be unique to the situation and/or the user that is receiving the reply message. For purposes of explanation and not limitation, the available reply messages can be unique to other users of the telephone communication system 10, such that a portion of the available reply messages would be communicated to a family member rather than a co-worker.

According to one embodiment, the first user of the telephone communication system 10 is not using the first telephone device when receiving a signal from a second user of a second telephone device. However, if the first user of the first telephone device does not desire to answer the telephone call, the first user can select a reply message on the first telephone device that is then transmitted to the second user of the second telephone device, such as, "I am at the movie theater - call you in an hour." Thus, the user can communicate information that is applicable to the receiver of the reply message (i.e., the second user) and/or the current situation without being required to answer the call.

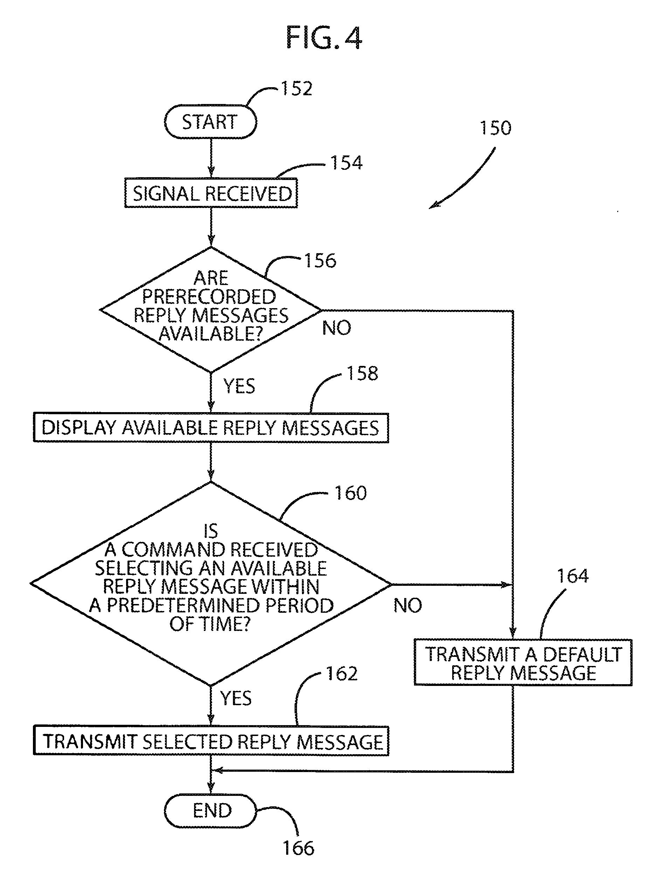

With respect to Figs. 1, 2, and 4, an exemplary software routine is generally shown in Fig. 4 at reference identifier 150. The software routine 150 starts at step 152, and proceeds to step 154, wherein a signal is received. According to one embodiment, the signal is received by the first telephone device from the second telephone device. In an alternate embodiment, the first telephone device is communicating with the third telephone device when the signal is received from the second telephone device. At decision step 156, it is determined if prerecorded reply messages are available. If it is determined at decision step 156 that there are prerecorded reply messages that can be made available, then the software routine 150 proceeds to step 158, wherein the available reply messages are displayed. Typically, the available reply messages are displayed on the display 16.

According to one embodiment, at decision step 160, it is determined if a command has been received selecting an available reply message within a predetermined period of time. According to one embodiment, a user of the first telephone device selects an available reply message using a touch screen, a keypad, a voice command, or the like. If it is determined at decision step 160 that a command is received selecting an available reply message, then the software routine 150 proceeds to step 162, wherein the selected reply message is transmitted. According to one embodiment, the selected reply message is transmitted to the second telephone device.

If it is determined at decision step 156 that there are no prerecorded reply messages available, or it is determined at decision step 160 that a reply message was not selected within the predetermined period of time, then the software routine 150 proceeds to step 164, wherein a default reply message is transmitted. According to one embodiment, the default reply message is transmitted to the second telephone device. Additionally or alternatively, there can be multiple default reply messages, such that a person or group of people can be designated to receive a particular reply message. By way of explanation and not limitation, a first group, such as family members, can be designated to receive a first default reply message, while a second group, such as business contacts, can be designated to receive a second default reply message. The software routine 150 then ends at step 166.

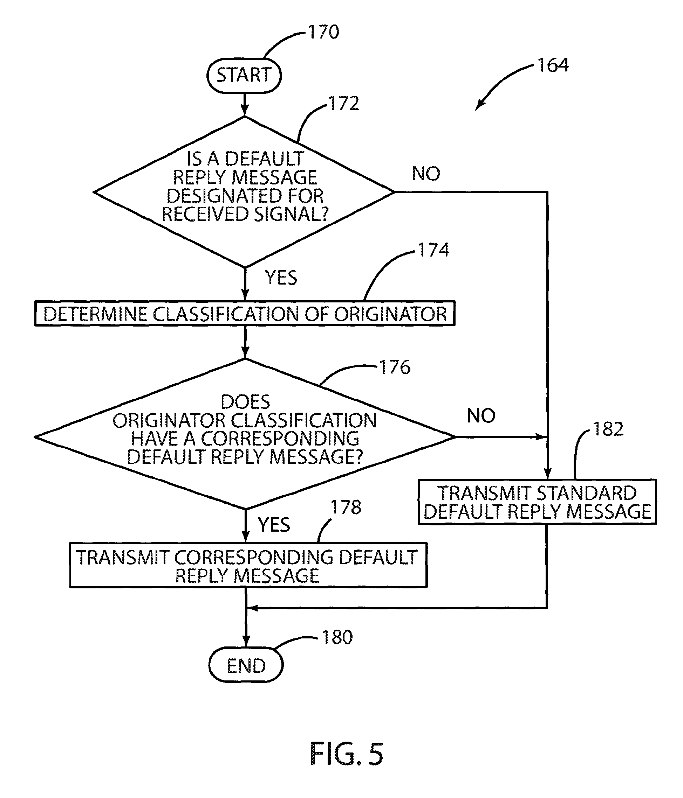

In reference to Figs. 1-2 and 4-5, an exemplary method for transmitting a default reply message is generally shown in Fig. 5 at reference identifier 164. The method 164 starts at step 170, and proceeds to step 172, wherein it is determined if a default reply message is designated for a received signal. According to one embodiment, it is determined if contacts, such as, but not limited to, family members, business contacts, the like, or a combination thereof, are designated in groups (i.e., using caller-ID) to receive a corresponding default reply message. If it is determined at decision step 172 that a default reply message is designated for a received signal, then the method 164 proceeds to step 174, wherein the classification of the originator is determined.

At decision step 176, it is determined if the originator classification has a corresponding default reply message, which is typically predetermined by the user of the first telephone device, according to one embodiment. If it is determined at decision step 176 that the originator classification has a corresponding default reply message, then the method 164 proceeds to step 178, wherein the corresponding default reply message is transmitted. The method 164 can then end at step 180.

However, if it is determined at decision step 172 that a default reply message is not designated for a received signal, then the method 164 proceeds to step 182, wherein a standard default reply message is transmitted. According to one embodiment, a standard default reply message is a predetermined reply message that is transmitted to all originators when the circumstances permit the default reply message be transmitted, or a reply message that is designated to be sent to originators that do not have a classification with a corresponding default reply message. Further, if it is determined at decision step 176 that the originator classification does not have a corresponding default reply message, then the method 164 proceeds to step 182, wherein the standard default reply message is transmitted. The method 164 can then end at step 180.

Advantageously, the user of a telephone device 12 in a telephone communication system 10 can transmit prerecorded reply messages that communicate specific information to another party based upon the current circumstances, rather than the other party hearing a generic voice mail message, and not receiving any information as to when they might be able to contact the user. Additionally, a variety of reply messages can be prerecorded or preset, such that the user can have different options for selecting the reply message based upon the current circumstances. Further, the telephone device 12 can schedule reminders based upon the selected reply messages in order to remind the user of the previously sent reply message.

## Claims

1. A telephone communication system (10) for transmitting reply messages, comprising: a plurality of telephone devices (12), wherein at least a first telephone device of said plurality of telephone devices (12) comprises:
hardware circuitry (14) configured to receive a signal from a second telephone device of said plurality of telephone devices (12); a display (16) in communication with said hardware circuitry (14), wherein said display (16) is configured to display an image when said signal is received; and **characterized by**:
a processor (18) in communication with said hardware circuitry (14) and said display (16), wherein said processor (18) is configured to: communicate with said hardware circuitry (14) to display said image, such that said image is displayed on said display (16) when said signal is received, wherein at least one prerecorded reply message is made available (106) for selection when said signal is received; receive a command inputted by a user of said first telephone device selecting (110) one of said available reply messages, wherein said selected reply message is transmitted (112) to said second telephone device within a time period that an originator would anticipate being directed to a voice mail or message system, and said selected reply message is unique to a situation and/or said originator that is receiving said reply message; set an alarm (114) to be activated at the expiration of a predetermined period of time, wherein said predetermined period of time is dependent upon said selected reply message; and provide another predetermined period of time to select said reply message, and if no said reply message is selected within said another predetermined period of time, then a default reply message is transmitted to said second telephone device.

2. The telephone communication system (10) of claim 1, wherein said transmitted reply message is at least one of an automated voice message, a voice message, a text message, a canned text message, a picture message, and a video message.

3. The telephone communication system (10) of claim 1, wherein said first telephone device is at least one of a landline telephone, a cellular telephone, a telephone integrated with a vehicle, a Voice over Internet Protocol (VoIP) telephone, and a two-way communication telephone, at least one software routine implemented by a hardware device.

4. The telephone communication system (10) of claim 1, wherein said first telephone device further comprises said processor (18), such that said first telephone device is configured to transmit said reply message.

5. The telephone communication system (10) of claim 1, wherein said processor (18) is included in said telephone communication system (10) and separate from said hardware circuitry (14) of at least one of said plurality of telephone devices (12).

6. A method (100) of communicating a reply message with a telephone device in a telephone communication system, said method (100) comprising the steps of: receiving (104) with a first telephone device a signal transmitted from a second telephone device; and displaying an image on a display (16) of said first telephone device when a signal is received by said first telephone device; and **characterized by**:
making at least one prerecorded reply message available (106) for selection when said signal is received; selecting (110) one said available reply message; and transmitting (112) said selected reply message to said second telephone device within a time period that an originator would anticipate being directed to a voice mail or message system, and said selected reply message is unique to a situation and/or said originator that is receiving said reply message; setting an alarm (114) to be activated at the expiration of a predetermined period of time, wherein said predetermined period of time is dependent upon said selected reply message; and
transmitting a default reply message (164) to said second telephone device if one of said available reply messages is not selected within another predetermined period of time.

7. The method (100) of claim 6, wherein said transmitted reply message is at least one of an automated voice message, a voice message, a text message, a canned text message, a picture message, and a video message.

8. The method (100) of claim 6, wherein said received command is one of a voice command, a touch screen command, and a keypad command.

9. The method (100) of claim 6 further comprising the step of using said first telephone device to communicate with a third user of a third telephone device when said signal is received from said second telephone device that renders said at least one reply message available.

10. The method (100) of claim 6 further comprising the step of a user of said first telephone device not using said first telephone device when said signal is received from said second telephone device that renders said at least one reply message available.

11. The method (100) of claim 6 wherein the step of transmitting a default reply message (164) to said second telephone device if one of said available reply messages is not selected within said another predetermined period of time, further comprises a first predetermined group of originators receiving a first default reply message (178), and a second predetermined group of originators receiving a second default reply message (182).

## Patentansprüche

1. Telefonkommunikationssystem (10) zum Übertragen von Antwortnachrichten, das aufweist: eine Vielzahl von Telefonvorrichtungen (12), wobei zumindest eine erste Telefonvorrichtung der Vielzahl von Telefonvorrichtungen (12) aufweist: hardwareschaltungen (14), die konfiguriert sind, ein Signal von einer zweiten Telefonvorrichtung der Vielzahl von Telefonvorrichtungen (12) zu empfangen; eine Anzeige (16) in Kommunikation mit den Hardwareschaltungen (14), wobei die Anzeige (16) konfiguriert ist, ein Bild anzuzeigen, wenn das Signal empfangen ist; und **gekennzeichnet durch**:
einen Prozessor (18) in Kommunikation mit den Hardwareschaltungen (14) und der Anzeige (16), wobei der Prozessor (18) konfiguriert ist zum:
Kommunizieren mit den Hardwareschaltungen (14), um das Bild anzuzeigen, so dass das Bild auf der Anzeige (16) angezeigt wird, wenn das Signal empfangen wird, wobei zumindest eine vorher aufgenommene Antwortnachricht verfügbar (106) gemacht wird zur Auswahl, wenn das Signal empfangen wird; Empfangen eines Befehls, der **durch** einen Benutzer der ersten Telefonvorrichtung eingegeben wird, zum Auswählen (110) einer der verfügbaren Antwortnachrichten, wobei die ausgewählte Antwortnachricht an die zweite Telefonvorrichtung übertragen wird (112) in einer Zeitdauer, die ein Absender erwarten würde bei einer Weiterleitung an ein Voicemail- oder Nachrichtensystem, und wobei die ausgewählte Antwortnachricht eindeutig für eine Situation und/oder den Absender ist, der die Antwortnachricht empfängt; Setzen eines Alarms (114) zur Aktivierung bei Ablauf einer vorgegebenen Zeitdauer, wobei die vorgegebene Zeitdauer von der ausgewählten Antwortnachricht abhängig ist; und Vorsehen einer weiteren vorgegebenen Zeitdauer zum Auswählen der Antwortnachricht, und wenn keine Antwortnachricht in der weiteren vorgegebenen Zeitdauer ausgewählt wird, dann wird eine Standardantwortnachricht an die Telefonvorrichtung übertragen.

2. Telefonkommunikationssystem (10) gemäß Anspruch 1, wobei die übertragene Antwortnachricht zumindest eine ist aus einer automatisierten Sprachnachricht, einer Sprachnachricht, einer Textnachricht, einer vorgespeicherten Textnachricht, einer Bildnachricht und einer Video-Nachricht.

3. Telefonkommunikationssystem (10) gemäß Anspruch 1, wobei die erste Telefonvorrichtung zumindest eine ist aus einem Festnetztelefon, einem zellularen Telefon, einem Telefon, das in einem Fahrzeug integriert ist, einem VoIP(Voice over Internet Protocol)-Telefon und einem Zweiwegkommunikationstelefon, wobei zumindest eine Softwareroutine durch eine Hardwarevorrichtung implementiert ist.

4. Telefonkommunikationssystem (10) gemäß Anspruch 1, wobei die erste Telefonvorrichtung weiter den Prozessor (18) aufweist, so dass die erste Telefonvorrichtung konfiguriert ist, die Antwortnachricht zu übertragen.

5. Telefonkommunikationssystem (10) gemäß Anspruch 1, wobei der Prozessor (18) in dem Telefonkommunikationssystem (10) enthalten ist und von den Hardwareschaltungen (14) von zumindest einer der Vielzahl von Telefonvorrichtungen (12) getrennt ist.

6. Verfahren (100) zum Kommunizieren einer Antwortnachricht mit einer Telefonvorrichtung in einem Telefonkommunikationssystem, wobei das Verfahren (100) die Schritte aufweist: Empfangen (104), mit einer ersten Telefonvorrichtung, eines Signals, das von einer zweiten Telefonvorrichtung übertragen wird; und Anzeigen eines Bilds auf einer Anzeige (16) der ersten Telefonvorrichtung, wenn ein Signal durch die erste Telefonvorrichtung empfangen wird; und **gekennzeichnet durch**:
zur Verfügung stellen (106) zumindest einer vorher aufgenommenen Antwortnachricht zur Auswahl, wenn das Signal empfangen wird; Auswählen (110) einer der verfügbaren Antwortnachrichten; und Übertragen (112) der ausgewählten Antwortnachricht an die zweite Telefonvorrichtung in einer Zeitdauer, die ein Absender erwarten würde bei einer Weiterleitung an ein Voicemail- oder Nachrichtensystem, und wobei die ausgewählte Antwortnachricht eindeutig für eine Situation und/oder den Absender ist, der die Antwortnachricht empfängt; Setzen eines Alarms (114) zur Aktivierung bei Ablauf einer vorgegebenen Zeitdauer, wobei die vorgegebene Zeitdauer von der ausgewählten Antwortnachricht abhängig ist; und
Übertragen einer Standardantwortnachricht (164) an die zweite Telefonvorrichtung, wenn keine der verfügbaren Antwortnachrichten in einer weiteren vorgegebenen Zeitdauer ausgewählt wird.

7. Verfahren (100) gemäß Anspruch 6 , wobei die übertragene Antwortnachricht zumindest eine aus einer automatisierten Sprachnachricht, einer Sprachnachricht, einer Textnachricht, einer vorgespeicherten Textnachricht, einer Bildnachricht und einer Video-Nachricht ist.

8. Verfahren (100) gemäß Anspruch 6, wobei der empfangene Befehl einer aus einem Sprachbefehl, einem Berührungsbildschirm-Befehl und einem Tastatur-Befehl ist.

9. Verfahren (100) gemäß Anspruch 6, das weiter aufweist den Schritt eines Verwendens der ersten Telefonvorrichtung, um mit einem dritten Benutzer einer dritten Telefonvorrichtung zu kommunizieren, wenn das Signal von der zweiten Telefonvorrichtung empfangen wird, die die zumindest eine Antwortnachricht zur Verfügung stellt.

10. Verfahren (100) gemäß Anspruch 6, das weiter aufweist den Schritt, dass ein Benutzer der ersten Telefonvorrichtung die erste Telefonvorrichtung nicht benutzt, wenn das Signal von der zweiten Telefonvorrichtung empfangen wird, die die zumindest eine Antwortnachricht zur Verfügung stellt.

11. Verfahren (100) gemäß Anspruch 6, wobei der Schritt eines Übertragens einer Standardantwortnachricht (164) an die zweite Telefonvorrichtung, wenn keine der verfügbaren Antwortnachrichten innerhalb der weiteren vorgegebenen Zeitdauer ausgewählt wird, weiter aufweist Empfangen, durch eine erste vorgegebene Gruppe von Absendern, einer ersten Standardantwortnachricht (178), und, durch eine zweite vorgegebene Gruppe von Absendern, einer zweiten Standardantwortnachricht (182).

## Revendications

1. Système de communication téléphonique (10) pour transmettre des messages de réponse, comprenant : une pluralité d'appareils téléphoniques (12), dans lesquels au moins un premier appareil téléphonique de ladite pluralité d'appareils téléphoniques (12) comprend : des circuits matériels (14) configurés pour recevoir un signal depuis un second appareil téléphonique de ladite pluralité d'appareils téléphoniques (12) ; un affichage (16) en communication avec lesdits circuits matériels (14), dans lequel ledit affichage (16) est configuré pour afficher une image quand ledit signal est reçu ; et **caractérisé par** :
un processeur (18) en communication avec lesdits circuits matériels (14) et avec ledit affichage (16), dans lequel ledit processeur (18) est configuré pour communiquer avec lesdits circuits matériels (14) pour afficher ladite image, de telle façon que ladite image est affichée sur ledit affichage (16) quand ledit signal est reçu, dans lequel au moins un message de réponse préenregistré est rendu disponible (106) pour sa sélection quand ledit signal est reçu ; pour recevoir un ordre entré par un utilisateur dudit premier appareil téléphonique qui sélectionne (110) l'un desdits messages de réponse disponibles, de sorte que ledit message de réponse sélectionné est transmis (112) audit second appareil téléphonique dans une période temporelle pendant laquelle une personne d'origine s'attendrait à être dirigée vers un système de courrier vocal ou un système de messages, et ledit message de réponse sélectionné est unique pour une situation et/pour pour ladite personne d'origine qui reçoit ledit message de réponse ; pour établir une alarme (114) à activer à l'expiration d'une période temporelle prédéterminée, ladite période temporelle prédéterminée dépendant dudit message de réponse sélectionné, et pour prévoir une autre période temporelle prédéterminée pour sélectionner ledit message de réponse et, si aucun message de réponse n'est sélectionné dans ladite autre période temporelle prédéterminée, un message de réponse par défaut est transmis audit second appareil téléphonique.

2. Système de communication téléphonique (10) selon la revendication 1, dans lequel ledit message de réponse transmis est au moins un message parmi un message vocal automatique, un message vocal, un message textuel, un message textuel enregistré, un message graphique, et un message vidéo.

3. Système de communication téléphonique (10) selon la revendication 1, dans lequel ledit premier appareil téléphonique est au moins un téléphone parmi un téléphone à réseau câblé, un téléphone cellulaire, un téléphone intégré dans un véhicule, un téléphone dit VoIP ("Voice over Internet Protocol"), et un téléphone de communication à deux sens, avec au moins une routine logicielle mise en oeuvre par un dispositif matériel.

4. Système de communication téléphonique (10) selon la revendication 1, dans lequel ledit premier appareil téléphonique comprend encore ledit processeur (18), de sorte que ledit premier appareil téléphonique est configuré pour transmettre ledit message de réponse.

5. Système de communication téléphonique (10) selon la revendication 1, dans lequel ledit processeur (18) est inclus dans le dit système de communication téléphonique (10) et séparément par rapport auxdits circuits matériels (14) de l'un au moins de ladite pluralité d'appareils téléphoniques (12).

6. Procédé (100) pour communiquer un message de réponse avec un appareil téléphonique dans un système de communication téléphonique, ledit procédé (100) comprenant les étapes consistant à :
recevoir (104) avec un premier appareil téléphonique un signal transmis depuis un second appareil téléphonique ; et afficher une image sur un affichage (16) dudit premier appareil téléphonique quand un signal est reçu par ledit premier appareil téléphonique ; et
**caractérisé par** :
mise à disposition (106) d'au moins un message de réponse préenregistré pour sa sélection quand ledit signal est reçu ; sélection (110) de l'un desdits messages de réponse disponibles ; et transmission (112) dudit message de réponse sélectionné audit second appareil téléphonique dans une période temporelle telle une personne d'origine s'attendrait à être dirigée vers un système de boîte vocale ou un système de messages, et ledit message de réponse sélectionné est unique pour une situation et/ou pour ladite personne d'origine qui reçoit ledit message de réponse ; établissement d'une alarme (114) à activer à l'expiration d'une période temporelle prédéterminée, ladite période temporelle prédéterminée dépendant dudit message de réponse sélectionné ; et
transmission d'un message de réponse par défaut (164) vers ledit second appareil téléphonique si l'un desdits messages de réponse disponible n'est pas sélectionné dans une autre période temporelle prédéterminée.

7. Procédé (100) selon la revendication 6, dans lequel ledit message de réponse transmise est au moins un message parmi un message vocal automatique, un message vocal, un message textuel, un message textuel enregistré, un message graphique, et un message vidéo.

8. Procédé (100) selon la revendication 6, dans lequel ledit ordre reçu est soit un ordre vocal, soit un ordre sur écran tactile, soit à un ordre par clavier.

9. Procédé (100) selon la revendication 6, comprenant en outre l'étape consistant à utiliser ledit premier appareil téléphonique pour communiquer avec un troisième utilisateur d'un troisième appareil téléphonique quand ledit signal est reçu depuis ledit second appareil téléphonique qui rend ledit au moins un message de réponse disponible.

10. Procédé (100) selon la revendication 6, comprenant en outre l'étape selon laquelle un utilisateur dudit premier appareil téléphonique n'utilise pas le dit premier appareil téléphonique quand ledit signal est reçu dudit second appareil téléphonique qui rend disponible ledit au moins un message de réponse.

11. Procédé (100) selon la revendication 6, dans lequel l'étape de transmission d'un message de réponse par défaut (164) vers ledit second appareil téléphonique si l'un desdits messages de réponse disponibles n'est pas sélectionné dans ladite autre période temporelle prédéterminée, comprend en outre qu'un premier groupe prédéterminé de personnes d'origine reçoit un premier message de réponse par défaut (178), et qu'un second groupe prédéterminé de personnes d'origine reçoit un second message de réponse par défaut (182).
